(19) Europäisches Patentamt

European Patent Office

Office européen des brevets

(11) **EP 3 493 063 A1**

(12) **EUROPEAN PATENT APPLICATION**

(43) Date of publication:
**05.06.2019 Bulletin 2019/23**

(51) Int Cl.:
**G06F 11/34** *(2006.01)*     **G06F 11/07** *(2006.01)*

(21) Application number: **18206855.1**

(22) Date of filing: **16.11.2018**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(30) Priority: **17.11.2017 GB 201719115** | (71) Applicant: **Valtech UK Ltd.**<br>**London N1 8AF (GB)**<br><br>(72) Inventor: **HOSKISSON, James Oliver Holmes**<br>**London, EN4 9PP (GB)**<br><br>(74) Representative: **Granleese, Rhian Jane**<br>**Marks & Clerk LLP**<br>**15 Fetter Lane**<br>**London EC4A 1BW (GB)** |

(54) **A MONITORING SYSTEM AND METHOD**

(57)     A method of monitoring a system,
the method comprising:
receiving first data, wherein said first data comprises a sequence of events, wherein the events are of different types;
analysing said first data to extract patterns in said sequence of events;
receiving second data indicating the performance of a system;
determining a relationship between the performance of said system and extracted patterns; and
outputting the determined relationship to a display,
wherein analysing said first data to extract patterns in said sequence comprises:
assigning each type of event to a character in an alphabet; and
combining characters in said alphabet to produce a new alphabet, said new alphabet being a minimum entropy alphabet representation of the events has been reached,

wherein determining a relationship between the status of the system and extracted patterns comprises matching characters from said minimum entropy alphabet with changes in the performance of said system.

Figure 1

**Description**

FIELD

Embodiments described herein are concerned with analysis systems and methods.

BACKGROUND

Identifying sequences of events that lead to a change in the status of a system is a complex task, especially when the sequence of events that has caused a change in status has not previously occurred. Such an example of this problem is identifying potential causes of cascade failure in highly interconnected networks such as power transmission systems, computer networks, traffic flows and financial institutions. In these networks, it is difficult to identify the sequences of nodes that could be involved in a cascade failure because the load on each of the nodes is highly dependent on the links to surrounding nodes. If the sequences of nodes that are likely to be involved in cascade failure could be identified, this would enable targeted intervention to reinforce those nodes and thus reduce the likelihood of a system wide collapse.

The difficulty in identifying the network nodes that are most likely to be involved in a cascade failure is that cascade failures, by design, don't happen very frequently. If one were to conduct a naive investigation into how load on nodes propagates throughout the network, the analysis would most likely return the nodes that are regularly under high load. There are many pre-existing sequence mining algorithms (SPADE, FP-Growth, apriori, etc.) that would be suitable to find the node sequences that regularly exhibit high load, but these methods do not uncover sequences of nodes that undergo high load *infrequently.*

The above problems can also occur when trying to classify human interaction with a system, such as a computer network.

BRIEF DESCRIPTION OF FIGURES

Figure 1 is a schematic of a user accessing a server over a network;
Figure 2 is a flow chart of a method in accordance with an embodiment of the invention;
Figure 3 is a flow chart of a method in accordance with an embodiment;
Figure 4 is a node diagram to demonstrate a branch and bound method;
Figure 5 is a another node diagram to demonstrate an aspect of the branch and bound method;
Figure 6 is a schematic of a network to aid with the explanation of an example in accordance with an embodiment;
Figure 7 is a schematic of the network of figure 6 after single node failure;
Figure 8 is a schematic of the network of figure 7 with two nodes failing;
Figure 9 is a schematic of the network of figure 8 undergoing cascade failure; and
Figure 10 is a schematic of an apparatus which can perform the method of the described embodiments.

DETAILED DESCRIPTION.

In an embodiment, a method of monitoring a system is provided,
the method comprising:

receiving first data, wherein said first data comprises a sequence of events, wherein the events are of different types;
analysing said first data to extract patterns in said sequence of events;
receiving second data indicating the performance of a system;
determining a relationship between the performance of said system and extracted patterns; and
outputting the determined relationship to a display,
wherein analysing said first data to extract patterns in said sequence comprises:

assigning each type of event to a character in an alphabet; and
combining characters in said alphabet to produce a new alphabet, said new alphabet being a minimum entropy alphabet representation of the events has been reached,

wherein determining a relationship between the status of the system and extracted patterns comprises matching characters from said minimum entropy alphabet with changes in the performance of said system.

In a second embodiment, a method of monitoring a system is provided, the method comprising:

> receiving first data, wherein said first data comprises a plurality of sequences of events, wherein the events are of different types;
> analysing said first data to extract sub-sequences from said plurality of sequences of events;
> comparing the frequency of extracted sub-sequences with a threshold; and
> outputting an alarm, if the frequency of selected sub-sequences exceed said threshold,

wherein analysing said first data to extract sub-sequences in said sequence comprises:

> assigning each type of event to a character in an alphabet; and
> combining characters in said alphabet to produce a new alphabet, said new alphabet being a minimum entropy alphabet representation of the events has been reached, wherein said sub-sequences correspond to characters in said minimum entropy alphabet.

The above methods can be used with systems which are liable to cascade failure. In cascade failure, a failure or irregularity in one part of the system will affect other parts of the system. When such systems fail, it is difficult to establish the original issue that triggered the failure.

An example, is in identifying potential causes of cascade failure in highly interconnected networks such as power transmission systems, computer networks, traffic flows and financial institutions. Here, each node could be labelled with a number and then it is possible to monitor the nodes visited by each packet sent across the network from all the edge nodes. This would produce a sequence database for each edge node where each entry indicates the nodes visited by a packet on route to its destination. In modern dynamic routing networks, the path taken across the network will change as individual nodes go online/offline or if a link between nodes fails, so the sequences in the database will represent different paths across the network.

In theory, the individual entries in the sequence database could be compared to find out whether there are any common routes taken but, in practice, each individual entry will be made up of combinations of several sub-routes. It is the sub-routes that are of interest rather than the overall route taken so the challenge is to deconstruct the routes in the sequence database to find the common sub-routes. Having found the sub-routes, taken by packets as they progress across the network, the most frequent and fall-back routes can be ascertained. This is important for preventing cascade failure because sub-routes that would normally only carry a small number of packets could become overwhelmed if one of the links in the most frequent sub-routes failed. Knowledge of the possible alternative routes allows network architects to reinforce these routes and thus reduce the risk of cascade failure where no packets can travel across the network.

Examples of systems that can suffer this failure are a processor, a computer network, a telecommunications network, a power network or a traffic network. Although, it should be noted that this list is not exhaustive.

The first method extracts sub-sequences and matches them with the performance of the system. This can in turn be used in fault diagnosis to determine the cause of a cascade failure. The display can be any type of display including a report.

The second method extracts the sub-sequences and looks for sub-sequences that are frequently occurring across multiple sequences and sends an alarm. The alarm can be an output on a report or a display. This method will allow the most frequent fall back routes to be determined.

In the second method, the threshold will be set dependent on the purpose. For example, if the method is applied to cascade failure of a network then the threshold would be set at a level where it would indicate a maximum (or close to maximum capacity) of a route through a network to which the subsequence corresponded.

If the method is applied to detecting the use of an undesirable pathway or a series of user inputs that might indicate fraudulent activity then the threshold may be set at 1.

To determine the performance of the system, receiving second data indicating the performance of a system comprises receiving data concerning parameters related to the performance of the system. For example, the parameters may be selected from at least one of a parameter indicating the operating status of a system, the length of time that the system is taking to perform operations, latency and the length of time that an information packet takes on a path through the system.

Examples of different types of events are selected from different node addresses or different locations in a memory. For example, different places where information such as web pages or responses to inputs are located.

In an embodiment, the first data comprises a plurality of individual sequences. For example, the plurality of individual sequences may relate to the path taken by a user or information packet when navigating the system. For example, an information packet when travelling through a network is identifiable from its header and the routers or nodes through which the packet passes are the events. A second (different) packet passing through the same network would create a second sequence of events. Here, for example, the behaviour of the system could be determined from the transit time of the packets.

Similarly, traffic, either electronic or vehicular could also be analysed in the same way. Here, the events could be junctions or other geographical landmarks through which the vehicles pass.

In the above system when applied to vehicles, the minimum entropy alphabet can help to identify when vehicles are taking an alternative route and can therefore provide feedback to allow traffic signals to be adjusted to cope with the changing traffic volumes. The same minimum entropy alphabet could alternatively be used to determine road blockages or other unscheduled impediments to free traffic movement

A similar situation can be seen from monitoring web page access from users. Here, the events relate to different webpages accessed.

The above analysis may be provided off-line from the system being monitored. For example, the data for a set time period may be downloaded and analysed.

In a further embodiment, the second data is analysed when the system is operating. In this situation a temporal analysis window may be provided and said determining of a relationship between the performance of said system and extracted patterns is performed for the first and second data received in said temporal analysis window. This temporal analysis window may be shifted forward with respect to time as further data is received.

Also, once a minimum entropy alphabet has been determined, this can then be used to monitor further data without the need to re-calculate the minimum entropy alphabet. Here, the minimum entropy alphabet is stored and used to analyse second data received after the minimum entropy alphabet has been constructed.

In an embodiment, combining characters to produce a new alphabet comprises generating successive generations of alphabets where each generation of alphabet contains a single new character produced by combining two characters in the previous generation.

When picturing the subsequent generations of alphabets the alphabets form a tree structure with an alphabet of one generation being a parent node to a plurality of alphabets in the following generation which are based on the parent alphabet, but each include one extra character. The minimum entropy alphabet can be determined by searching said tree structure.

In an embodiment, the tree structure is searched using a branch and bound algorithm. Here, a zeroth alphabet, where type of event is represented by a separate character is the root node, and a search space for the answer is determined by estimating the bounds on a potential solution that a branch might provide.

In an embodiment, the branch and bound method comprises selecting a branch for investigation by estimating the lowest entropy of the alphabets at subsequent generations of the branch.

In one method, the lowest entropy of the alphabets at the subsequent generations of the branch is determined by expressing the entropy of these alphabets as a function in terms of first indexed parameter and second indexed parameter, the minimum entropy being estimated by estimating the minimum of the function with respect to both the first and second indexed parameters, wherein the first indexed parameter is the probability that each new character added in each generation appears in the sequence and the second indexed parameter is a matrix, for each generation representing the combination of characters that are used to make the new character.

The above is a difficult problem since the order of the function depends on the generation of the alphabet for which the minimum entropy is being estimated. However, the problem can be simplified by exploiting the Lie group properties of the underlying transformations.

In an embodiment, the minimum entropy is estimated using a concave minimisation method.

The minimum entropy can be estimated for the total number of generations in the tree. In practice, this will be dependent on the total number of generations.

The above description has concentrated on the use of the above method to monitor the performance of a system. However, this can also be adapted to a method for monitoring the behaviour of a user using a system, the method comprising:

> receiving first data, wherein said first data comprises a sequence of events, wherein the events are of different types;
> analysing said first data to extract patterns in said sequence of events;
> receiving second data indicating the response of a system;
> determining a relationship between the behaviour of said system and extracted patterns; and
> outputting the determined relationship to a display,

wherein analysing said first data to extract patterns in said sequence comprises:

> assigning each type of event to a character in an alphabet; and
> combining characters in said alphabet to produce a new alphabet, said new alphabet being a minimum entropy alphabet representation of the events has been reached,

wherein determining a relationship between the status of the system and extracted patterns comprises matching characters from said minimum entropy alphabet with changes in the status of said system.

Also, in an embodiment, a method of monitoring the behaviour of a user using a system is provided, the method comprising:

receiving first data, wherein said first data comprises a plurality of sequences of events, wherein the events are of different types;
analysing said first data to extract sub-sequences from said plurality of sequences of events;
comparing the frequency of extracted sub-sequences with a threshold; and
outputting an alarm, if the frequency of selected sub-sequences exceed said threshold,

wherein analysing said first data to extract sub-sequences in said sequence comprises:

assigning each type of event to a character in an alphabet; and
combining characters in said alphabet to produce a new alphabet, said new alphabet being a minimum entropy alphabet representation of the events has been reached, wherein said sub-sequences correspond to characters in said minimum entropy alphabet.

As above, the above method allows sub-sequences to be identified which can indicate a cascade failure.
In a further embodiment, a method of monitoring the behaviour of a plurality of users using a system is provided, the method comprising:

receiving first data, wherein said first data comprises a plurality of sequences of events, wherein the events are of different types;
analysing said first data to extract sub-sequences from said plurality of sequences of events;
comparing the multiple sequences expressed in terms of their sub-sequences; and
outputting an indication that sequences are similar if there are matching sub-sequences,

wherein analysing said first data to extract sub-sequences in said sequence comprises:

assigning each type of event to a character in an alphabet; and
combining characters in said alphabet to produce a new alphabet, said new alphabet being a minimum entropy alphabet representation of the events has been reached, and wherein said sub-sequences correspond to characters in said minimum entropy alphabet.

The above allows similar behaviour between users on a computer system to be identified.
In the above situation, the first data may comprise a sequence of inputs to a computer terminal made by the user, or web pages accessed by a user.
The status of the system can be a critical status, such as indicating failure of the system, or the status could be indicating a webpage or output given to a user over time.
Once a minimum entropy alphabet has been generated, it can be used for signals and data received after the data from which the minimum entropy alphabet was constructed. For example, if a sub-sequence has been shown to be not desirable, for example, if it is associated with user behaviour that leads to fraud or suggests a part of the network is being used that has low capacity, later received data signals can be searched for the presence of this sequence.
The above methods are computer implemented methods.
In a further embodiment, a monitoring apparatus is provided, the apparatus comprising:

a processor adapted to:

receive first data, wherein said first data comprises a sequence of events, wherein the events are of different types;
analyse said first data to extract patterns in said sequence of events;
receiving second data indicating the performance of a system; and
determine a relationship between the performance of said system and extracted patterns,

the apparatus further comprising an output for outputting the determined relationship,
wherein the processor is adapted to analyse said first data to extract patterns in said sequence by:

assigning each type of event to a character in an alphabet; and
combining characters in said alphabet to produce a new alphabet, said new alphabet being a minimum entropy alphabet representation of the events has been reached,

the processor being adapted to determine a relationship between the status of the system and extracted patterns by matching characters from said minimum entropy alphabet with changes in the performance of said system.

In a further embodiment, a monitoring apparatus is provided, the apparatus comprising:

a processor adapted to:

receive first data, wherein said first data comprises a plurality of sequences of events, wherein the events are of different types;
analyse said first data to extract sub-sequences from said plurality of sequences of events;
compare the frequency of extracted sub-sequences with a threshold; and
the apparatus further comprising an output for an alarm if the frequency of selected sub-sequences exceed said threshold,

wherein the processor is adapted to analyse said first data to extract patterns in said sequence by:

assigning each type of event to a character in an alphabet; and
combining characters in said alphabet to produce a new alphabet, said new alphabet being a minimum entropy alphabet representation of the events has been reached, wherein said sub-sequences correspond to characters in said minimum entropy alphabet.

In a further embodiment, an apparatus for monitoring the behaviour of a user using a system is provided, the apparatus comprising:

a processor adapted to:

receive first data, wherein said first data comprises a sequence of events, wherein the events are of different types;
analyse said first data to extract patterns in said sequence of events;
receive second data indicating the response of a system; and
determine a relationship between the behaviour of said system and extracted patterns;
the apparatus further comprising an output for outputting the determined relationship,

wherein the processor is adapted to analyse said first data to extract patterns in said sequence by

assigning each type of event to a character in an alphabet; and
combining characters in said alphabet to produce a new alphabet, said new alphabet being a minimum entropy alphabet representation of the events has been reached,

wherein the processor is adapted to determine a relationship between the status of the system and extracted patterns by matching characters from said minimum entropy alphabet with changes in the status of said system.

In a further embodiment, an apparatus for monitoring the behaviour of a user using a system is provided, the apparatus comprising:

a processor adapted to:

receive first data, wherein said first data comprises a plurality of sequences of events, wherein the events are of different types;
analyse said first data to extract sub-sequences from said plurality of sequences of events; and
compare the frequency of extracted sub-sequences with a threshold; and
the apparatus further comprising an output for an alarm if the frequency of selected sub-sequences exceed said threshold,

wherein the processor is adapted to analyse said first data to extract sub-sequences by:

assigning each type of event to a character in an alphabet; and
combining characters in said alphabet to produce a new alphabet, said new alphabet being a minimum entropy alphabet representation of the events has been reached, wherein said sub-sequences correspond to characters in said minimum entropy alphabet.

In a further embodiment, an apparatus for monitoring the behaviour of a plurality of users using a system is provided,
the apparatus comprising:

a processor adapted to:

receive first data, wherein said first data comprises a plurality of sequences of events, wherein the events are of different types;
analyse said first data to extract sub-sequences from said plurality of sequences of events; and
compare the multiple sequences expressed in terms of their sub-sequences; and

the apparatus further comprising an output for outputting an indication that sequences are similar if there are matching sub-sequences,
wherein the processor is adapted to analyse said first data to extract sub-sequences by:

assigning each type of event to a character in an alphabet; and
combining characters in said alphabet to produce a new alphabet, said new alphabet being a minimum entropy alphabet representation of the events has been reached, and wherein said sub-sequences correspond to characters in said minimum entropy alphabet.

Since some methods in accordance with embodiments can be implemented by software, some embodiments encompass computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal.

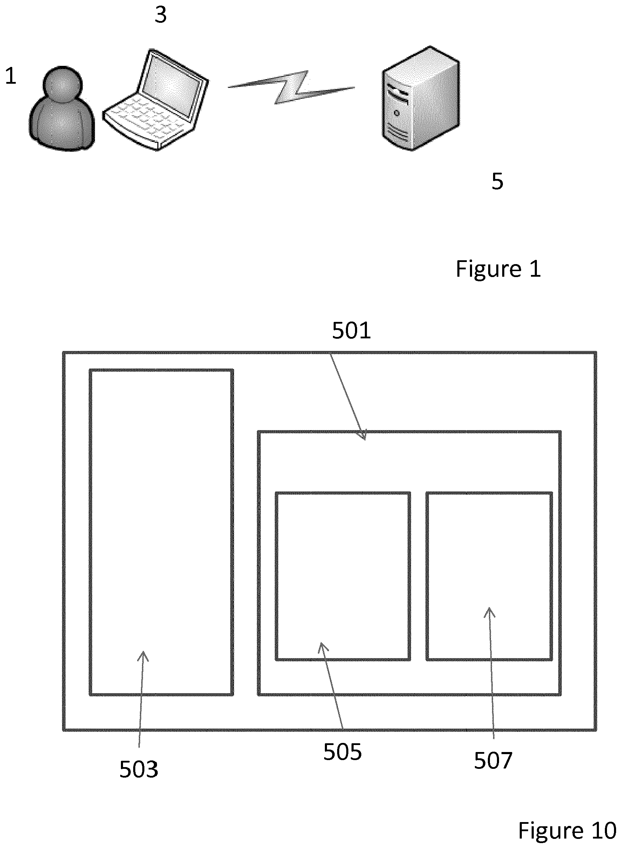

Figure 1 is a rough schematic of a user 1 using a computer 3. The computer is connected to a server 5 via, for example, the Internet.

As the user enters the web page address, for example, for a service provider, the user is presented with many different options which they can follow to extract the information that they require from the server 5. Every time the user clicks on an option, a new webpage is loaded from information derived from the server. Therefore, from a point of view of reducing traffic on a network, it is desirable for a user to be able to access the information that they require using the lowest number of webpages.

If the user either intentionally or unintentionally clicks on options which take the user via a rather roundabout route to the desired information, it is helpful if the service provider is aware that this is happened so that they can improve the intelligibility of their webpages.

Also, if the user is accessing webpages in a particular order, this might be indicative of fraud. In a simple scenario, this could simply be the same user revisiting a website multiple times using different IDs and passwords.

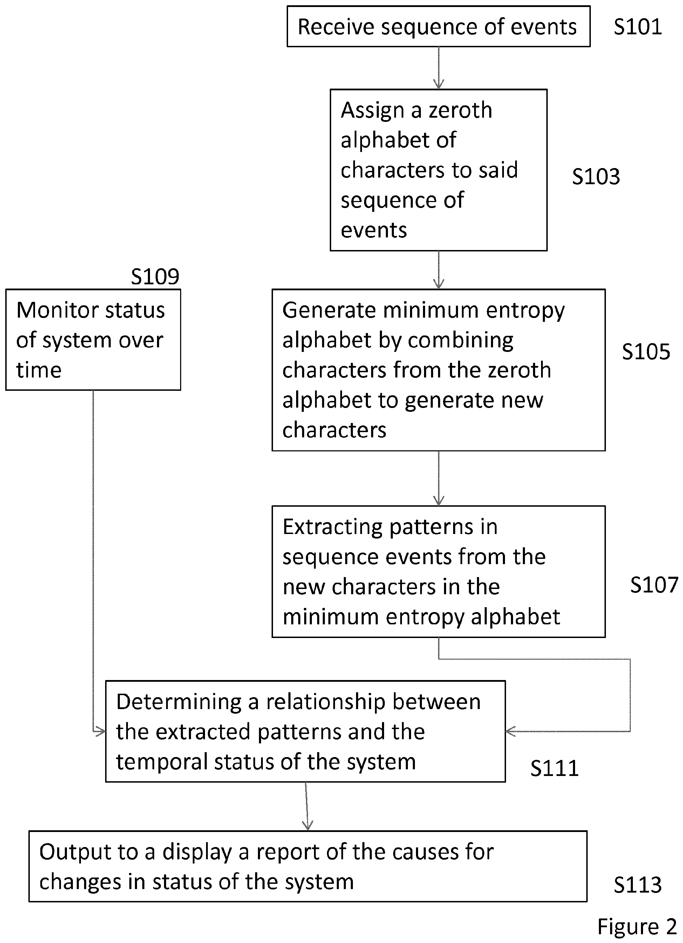

To help identify the above behaviour, in an embodiment, sequences of events are extracted from sequences of events performed by a user using the flowchart of figure 2.

In figure 2, the user accesses web page (a) and web page (b). Although this example talks about web pages, any two actions could be used, for example, two data gathering actions performed by a medical imaging apparatus, e.g. B-mode imaging and Doppler imaging in ultrasound, the passage of a packet through a plurality of nodes in a packet switched network.

However, the system can probably be best understood taking first a very simple example of say two web pages where one page indicates a login screen and the other indicates a successful password entry screen. It can be assumed that the password entry screen is shown if an incorrect password is entered.

First, sequences of actions/events are received and recorded in step S101, for example these could be a log of the webpages accessed by the user.

Each event is then assigned a character to produce a zeroth alphabet in step S103
abbaaab
abababaabab
aabaabbaaab

The above will be referred to as a database of sequences. In practice, there are likely to be 1000's of sequences. However, three will be used here as an illustrative example.

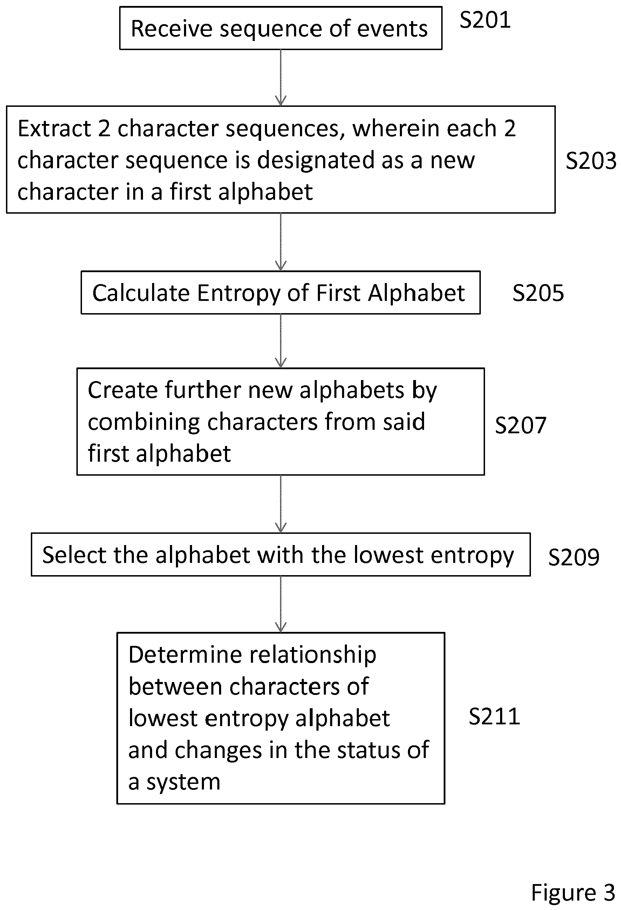

The aim is to extract the minimum entropy alphabet to make the above sequences in step S105. However, how this will be performed will be described with reference to figure 3.

Once the minimum entropy alphabet has been achieved, this alphabet will lead to minimal repetition of characters in the new alphabet. However, this alphabet will have some characters that repeat and some characters that only occur once.

In step S109, the temporal status of the system is monitored. For example, in the above embodiment where the user is clicking on webpages, the temporal status of the system could be defined as the last webpage which corresponds to each sequence. Alternatively, the status could be where the system has been experiencing high traffic or where it's operating speed becomes slow.

In step Sill, the status of the system from step S109 is compared with the patterns extracted in step S107. Temporal data will be kept both in relation to the status of the system and when the patterns occurred. Therefore, it is possible to link a pattern directly with the state of the system.

Next, in step S113, a report is outputted to some form of display, which can be a file for outputting to a screen or, a file for outputting to a hardcopy indicating how the behaviour matches with the changes in status of the system.

Figure 3 is a flowchart showing the process of determining the minimum entropy alphabet in more detail.

As before, sequences of events are received and recorded in step S201 and saved to a database.

In step S203, potential 2 letter sequences are extracted from the database.

For example, the two letter sequences could be taken to be:

aa, ba, ab, bb and then individual a's and b's.

The 4 above letter sequences and the single letters form new characters in a new alphabet. Next, in step S205, the entropy of the first alphabet is determined. To determine the entropy, the probability of each new character of the new alphabet is calculated.

For example, taking the first character of the new alphabet to be:

ab - the number of ab occurrences is 10

To calculate the number of occurrences of the next character in the alphabet, first all occurrences of the previous character in the same alphabet are deleted from the sequences received in section S101.

After deleting all occurrences of "ab", the next character "ba" occurs 2 times. For aa and bb, the number of occurrences are 0 once the first two characters have been removed. For "a" the number of occurrences is 5. For "b", the number of occurrences is 0.

Therefore, using the new alphabet, 17 characters are present in the sequence and this gives:

$$P(ab) = 10/17$$

$$P(ba) = 2/17$$

$$P(a) = 5/17$$

Note that it is important in which order the new characters are extracted from the sequences in the sequence database. In an embodiment, all possible permutations will be considered.

Once the above probabilities have been calculated the entropy H is calculated in step S205:

$$H = -\sum p(x) log p(x) \qquad (1)$$

Where $x$ is the probability of each character

So, for the above simplified example:

$$H = -\left(\frac{10}{17}\log\left(\frac{10}{17}\right) + \frac{2}{17}\log\left(\frac{2}{17}\right) + \frac{5}{17}\log\left(\frac{5}{17}\right)\right)$$

To implement the above, further alphabets are created by combining characters and the lowest entropy alphabet is selected in step S209. The process to achieve this is explained below

The method of determining the lowest entropy alphabet will first be explained with reference to a simple example.

Hereafter, each character of each alphabet will be denoted as $x_j^{(i)}$, where $x$ denotes the character, $i$ is an index that denotes the alphabetic generation and $j$ is an index that denotes the character within the alphabet.

If the alphabet $A^{(1)}$ can be written as:

$$A^{(1)} = \left\{ x_1^{(1)}, x_2^{(1)}, x_3^{(1)} \right\}$$

Where $x_1^{(1)} = ab$; $x_2^{(1)} = ba$ and $x_3^{(1)} = a$

Rewriting the above sequences of events first captured now results in:

1) $x_1^{(1)} x_2^{(1)} x_3^{(1)} x_1^{(1)}$

2) $x_1^{(1)} x_1^{(1)} x_1^{(1)} x_3^{(1)} x_1^{(1)} x_1^{(1)}$

3) $x_3^{(1)} x_1^{(1)} x_3^{(1)} x_1^{(1)} x_2^{(1)} x_3^{(1)} x_1^{(1)}$

Combining the above characters such that:

$x_1^{(2)} = x_1^{(1)} x_2^{(1)}$; $x_2^{(2)} = x_3^{(1)} x_1^{(1)}$; $x_3^{(2)} = x_1^{(1)}$ and $x_4^{(2)} = x_3^{(1)}$

Gives:

1) $x_1^{(2)} x_2^{(2)}$

2) $x_3^{(2)} x_3^{(2)} x_3^{(2)} x_2^{(2)} x_3^{(2)}$

3) $x_2^{(2)} x_4^{(2)} x_1^{(2)} x_2^{(2)}$

Combining the above new characters again such that:

$x_1^{(3)} = x_1^{(2)} x_2^{(2)}$; $x_2^{(3)} = x_2^{(2)} x_4^{(2)}$; $x_3^{(3)} = x_3^{(2)}$ and $x_4^{(3)} = x_2^{(2)} x_3^{(2)}$

Gives:

1) $x_1^{(3)}$

2) $x_3^{(3)} x_3^{(3)} x_3^{(3)} x_4^{(3)}$

3) $x_2^{(3)} x_1^{(3)}$

As can be seen from the above, the number of characters used to describe the complex sequences is reducing.

Combining the above new characters again such that:

$x_1^{(4)} = x_1^{(3)}$; $x_2^{(4)} = x_2^{(3)} x_1^{(3)}$; $x_3^{(4)} = x_3^{(3)} x_3^{(3)}$ and $x_4^{(4)} = x_3^{(3)} x_4^{(3)}$

Gives:

1) $x_1^{(4)}$

2) $x_3^{(4)} x_4^{(4)}$

3) $x_2^{(4)}$

The above is merely a way to help one envisage the process. To implement the process in a programmable manner, in an embodiment, each new alphabet is created by adding a new character to the existing alphabet.

Also, by adding a new character to the alphabet in each iteration, it is possible to ensure that the new alphabet can be used to express all the sequences in a particular sequence database. In this situation, the alphabet is said to be sufficient to describe the sequence database. Given an arbitrary alphabet $A^*$, there is no guarantee that it will be sufficient. For example, suppose that $A^* = \{x_1, x_2, x_3\}$ where:

$$x_1 = \mathrm{ab}$$

$$x_2 = \mathrm{b}$$

$$x_3 = \mathrm{ba}$$

and the sequence database has three sequences:

1) abbaaab
2) abababaabab
3) aabaabbaaab

Replacing every instance of "ab" with $x_1$ gives:

1) $x_1$baa$x_1$
2) $x_1x_1x_1$a$x_1x_1$
3) a$x_1$a$x_1$baa$x_1$

Then replacing every instance of "b" with $x_2$ gives:

1) $x_1x_2$aa$x_1$
2) $x_1x_1x_1$a$x_1x_1$
3) a$x_1$a$x_1x_2$aa$x_1$

At this point it is impossible to continue because the individual character "a" doesn't exist in $A^*$. A similar outcome is obtained if the characters are replaced in any other order, thus $A^*$ is not sufficient with respect to the sequence database considered above. An extra character "a" would have to be added to the alphabet to make it sufficient.

Fortunately, if a new alphabet $A^{(i+1)}$ is generated using the process outlined previously, and alphabet $A^{(i)}$ is sufficient, then alphabet $A^{(i+1)}$ will also be sufficient. This is because characters are only ever added to the alphabet so, when a new character is added, the number of instances of the characters from alphabet $A^{(i)}$ will be reduced but all of the characters in this alphabet will still be present in alphabet $A^{(i+1)}$. In the extreme case, there could be no occurrences of the new character in alphabet $A^{(i)}$ which would mean that the sequences would remain the same up to a change in the labelling.

Given that the algorithm always starts with a sufficient alphabet, the original sequences to be analysed, the fact that every subsequent alphabet will be sufficient follows by induction.

Also, in an embodiment, it is important to consider what is meant by a new character. Consider a sequence that has the same order of characters at the beginning and end of the sequence e.g. "aba" has "a" at the beginning and end of the subsequence so given "ababa" the subsequence can be matched at the beginning or the end. This repeated sequence at the beginning and end has to be at least one character long but the other characters in the subsequence can be chosen arbitrarily. However, if the subsequence is only two characters long then there can't be any intermediate characters so the only possibility is for the subsequence to be composed of two identical characters.

For example the subsequence "aa" can be extracted from "aaab" in two ways. Writing the new character as "X" where X = "aa", there are two different ways of extracting "aa" from the sequence. When this is done, the possible sequences are: "Xab" and "aXb".

In the above example, and in general, the numbers (and hence probability of occurrence) of each of the characters is the same no matter how the subsequence is extracted and consequently the entropy associated with this choice of new character will remain the same. Unfortunately, the choice of how to extract the new character does affect future character selections. This can be seen in the above example where the decision to extract the new character from the first two a's allows "Xa" or "ab" to be chosen as a new character. Alternatively, if the new character is extracted from the second and third a's then the options for new characters are "aX" or "Xb". In an embodiment, this is taken into account when attempting to determine a minimum entropy representation of the sequences in the database.

In an embodiment, to ensure that all possible combinations of characters are taken into account, any sequence in the database that has more than two consecutive repeating characters has to be considered separately to other sequences. For these sequences, each possible way of extracting the subsequence is treated like a different choice of new character. This means that a new branch is formed for every possible way of extracting the new character from all of the sequences in the sequence database.

As an example, suppose that a new character "X" is to be formed by combining the character "a" twice and "aaa" occurs in two of the sequences in the database, then the choice of X = "aa" as the new character leads to four branches:

- The first when "X" is extracted from the first two a's of the first sequence and the first two a's of the second sequence.
- The second when "X" is extracted from the second and third a's from the first sequence and the first two a's of the second sequence.
- The third when "X" is extracted from the first two a's of the first sequence and the second and third a's of the second sequence.
- The fourth when "X" is extracted from the second and third a's of the first sequence and the second and third a's of the second sequence.

The above examples are a simplified demonstration of the concept. In practice, these sequences will be far too long to reliably create via a manual process. Below the basis of an algorithm will be described where the minimum entropy alphabet is determined by considering the impact on the entropy by adding a new character to an existing alphabet to produce a new alphabet.

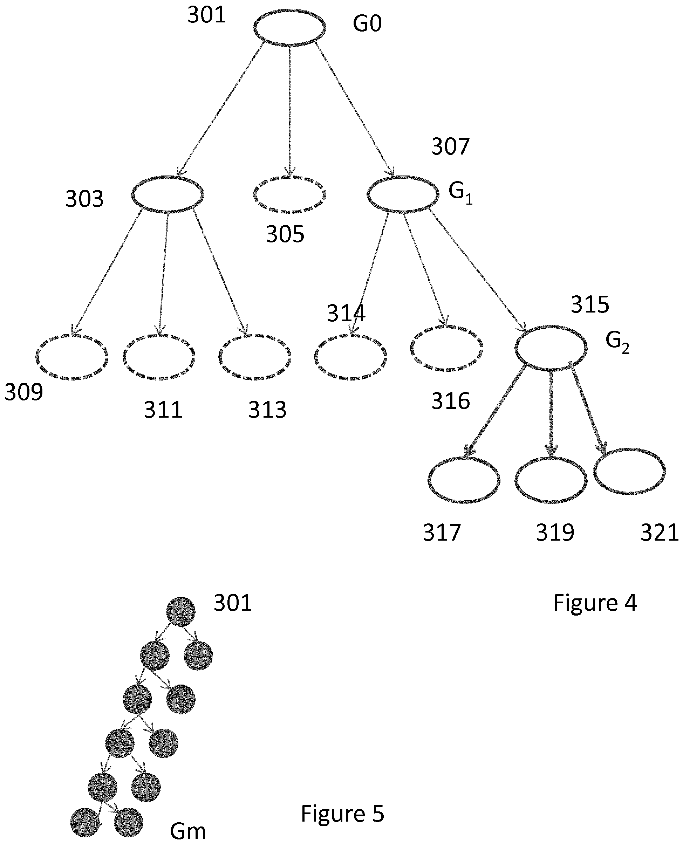

Such a structure quickly expands into a tree-like search procedure for the lowest entropy. In an embodiment, a branch and bound algorithm is used to efficiently search the space. This will be described in more detail with reference to figure 4.

To avoid explicitly calculating the entropy of the new alphabet, a range for the entropy of an alphabet with a new character is estimated. The upper value for this range is assumed to be the lowest entropy found so far (the current minimum entropy). However, the lowest bound on this estimated range requires a more complex calculation.

By constructing new sequences, new characters represent patterns of events and it is possible to isolate sequences of events that are linked to changes in the overall status of the system regardless of whether these patterns are frequently or infrequently occurring.

First, a relationship will be derived between the probability of a character occurring in a first alphabet and how that probability changes on the addition of a new character.

Where $N$ is the number of characters in the alphabet $A^{(i)}$, then the alphabet $A^{(i+1)}$ is written as:

$$A^{(i+1)} = \left\{ x_1^{(i+1)}, x_2^{(i+1)} \ldots\ldots\ldots x_N^{(i+1)}, c \right\}$$

Where $c$ is a new character and $x_1^{(i+1)} = x_1^{(i)}$

Given a sequence database, where each sequence is composed of characters taken from alphabet $A^{(i)}$, it is possible to determine how the probability of occurrence of each character in the alphabet changes as further characters are added to the alphabet.

Once the relationship between the probability of occurrence of the same character in two different alphabets is known, it is possible to analyse how the entropy will evolve under different choices of alphabet.

To calculate how the probabilities of each of the characters in an alphabet $A^{(i)}$ change after adding further characters, consider the following definitions:

Let $\Gamma_j$ represent sequence $j$ in the sequence database composed of characters taken from alphabet $A^{(i)}$.

Let $n_\phi(x)$ represent a function that maps the sequence $x$ to the number of characters in sequence $x$ using characters taken from the set $\phi$. Often $\phi$ will be an alphabet $A^{(i)}$ but can also be a set of a single item e.g. a single character from an alphabet.

Using the above definitions, the total number of characters from all sequences in the sequence database is given by:

$$N_{A^{(i)}} = \sum_j n_{A^{(i)}}(\Gamma_j) \tag{2}$$

where the sum is taken over all sequences in the sequence database.

Adding a character to the alphabet will change the total number of characters in the sequence database. The new total number of characters in the sequence database, after representing all the sequences in the new alphabet, is given by:

$$N_{A^{(i+1)}} = \sum_j n_{A^{(i+1)}}(\Gamma_j) \tag{3}$$

To calculate $n_{A^{(i+1)}}(\Gamma_j)$ it is necessary to consider the new character that was added to the alphabet. Let c represent the new character which is generated by concatenating characters from alphabet $A^{(i)}$. Consequently, alphabet $A^{(i+1)}$ is equal to the set of all characters in alphabet $A^{(i)}$ after adding the new character c i.e.

$$A^{(i+1)} = A^{(i)} \cup c \tag{4}$$

Having defined the new character, the number of characters in each of the existing journeys is calculated by taking the number of characters from $A^{(i)}$, subtracting the number of characters that were absorbed by introducing the new character c, and then adding on the number of c's that were introduced. Algebraically, this is expressed as:

$$n_{A^{(i+1)}}(\Gamma_j) = n_{A^{(i)}}(\Gamma_j) - n_c(\Gamma_j)n_{A^{(i)}}(c) + n_c(\Gamma_j) \tag{5}$$

Summing this expression over all journeys $\Gamma_j$ gives

$$N_{A^{(i+1)}} = N_{A^{(i)}} + \left(1 - n_{A^{(i)}}(c)\right)\sum_j n_c(\Gamma_j) \tag{6}$$

In an embodiment, the characters in the new alphabet $A^{(i+1)}$ are considered separately according to whether they are in $A^{(i)}$ or not. If the characters from $A^{(i+1)}$ are represented by $x_i \in A^{(i)}$ and a new character $c \notin A^{(i)}$ then

$$N_{x_k}^{(i)} = \sum_j n_{x_k}(\Gamma_j) \tag{7}$$

$$N_{x_k}^{(i+1)} = N_{x_k}^{(i)} - n_{x_k}(c)\sum_j n_c(\Gamma_j) \tag{8}$$

where the bracketed superscript i is used to indicate the iteration of the algorithm that the symbol corresponds to. This is necessary to, for example, distinguish between the number of occurrences of a character $x_k$ at iteration 1 and iteration 2 since the frequency of occurrence of $x_k$ will reduce if a new character, composed from $x_k$, is added to the alphabet.

Having determined expressions for the occurrences of each character in alphabet $A^{(i+1)}$ it is now possible to determine how the probability of occurrence of each character changes as new characters are added to the alphabet. At iteration i, the probability of occurrence of character $x_k$ is given by

$$P\left(x_k^{(i)}\right) = \frac{N_{x_k}^{(i)}}{N_{A^{(i)}}} \tag{9}$$

Calculating the equivalent expression at iteration i + 1 gives

$$P\left(x_k^{(i+1)}\right) = \frac{N_{x_k}^{(i+1)}}{N_{A^{(i+1)}}} \qquad (10)$$

$$= \frac{N_{x_k}^{(i)} - n_{x_k}(c)\sum_j n_c(\Gamma_j)}{N_{A^{(i)}} + \left(1 - n_{A^{(i)}}(c)\right)\sum_j n_c(\Gamma_j)} \qquad (11)$$

The probability of occurrence of the character introduced in alphabet $A^{(i+1)}$ is calculated as the ratio of the number of occurrences of the new character divided by the total number of characters for alphabet $A^{(i+1)}$

Rearranging the above gives

$$P\left(x_k^{(i+1)}\right) = (1 + \Theta(c))\, P\left(x_k^{(i)}\right) - \frac{\Theta(c)n_{x_k}(c)}{n_{A^{(i)}}(c) - 1} \qquad (12)$$

where

$$\Theta(c) = \frac{n_{A^{(i)}}(c) - 1}{N_{A^{(i+1)}}}\sum_j n_c(\Gamma_j) \qquad (13)$$

The probability of occurrence of the character introduced in alphabet $A^{(i+1)}$ is calculated as the ratio of the number of occurrences of the new character divided by the total number of characters for alphabet $A^{(i+1)}$.

$$P(c) = \frac{\sum_j n_c(\Gamma_j)}{N_{A^{(i+1)}}} \qquad (14)$$

This can likewise by expressed in terms of $\Theta(c)$ as

$$P(c) = \frac{\Theta(c)}{n_{A^{(i)}}(c) - 1} \qquad (15)$$

Eliminating $\Theta(c)$ between (12) and (15) allows the probability of $P\left(x_k^{(i+1)}\right)$ to be expressed in terms *of* $P(c)$.

$$P\left(x_k^{(i+1)}\right) = P\left(x_k^{(i)}\right) + \left[P\left(x_k^{(i)}\right)\left(n_{A^{(i)}}(c) - 1\right) - n_{x_k}(c)\right]P(c) \qquad (16)$$

Considering all possible ways of creating a new character c from alphabet $A^{(i)}$ soon becomes intractable so, without any loss of generality, in an embodiment, each new character is to be composed of only two characters from $A^{(i)}$. This ensures that $n_{A^{(i)}}(c) = 2$ for all iterations of the algorithm so the above equation then simplifies to:

$$P\left(x_k^{(i+1)}\right) = (1 + P(c))P\left(x_k^{(i)}\right) - n_{x_k}(c)P(c) \qquad (17)$$

This equation now allows the probabilities of the characters in any alphabet $A^{(i+1)}$ to be determined for any arbitrary $P(c)$.

To avoid confusion, the notation $P(c)$ is reserved to represent the probability of a new character c when it is known which characters from alphabet $A^{(i)}$ are to be combined to form the new character. When the probabilities of the existing characters $x_k^{(i)}$, after the introduction of an undetermined character with an arbitrary probability, are to be calculated then $P(c)$ is replaced with $P_c$ to indicate that the probability of the new character is being treated as a parameter rather than as the outcome of combining pre-existing characters from $A^{(i)}$. In this case, the probability updating formula (17) becomes

$$P\left(x_k^{(i+1)}\right) = (1 + P_C)P\left(x_k^{(i)}\right) - n_{x_k}(c)P_c \qquad (18)$$

The above allows the calculation of entropy of a new alphabet. However, it is not feasible to calculate the entropy for every possible combination of characters.

Figure 4 is a schematic diagram. $G_0$ relates to generation zero and it is the zeroth alphabet where each character corresponds to an event. The entropy for the zeroth generation alphabet, with just a single node 301 is calculated as explained above using the calculated probability of each character in the alphabet.

In this simplified diagram, it will be assumed that there are 3 possibilities for combining characters to produce new characters. Each of these possibilities gives rise to a node 303, 305, 307 in the generation 1 level $G_1$. To most efficiently reach the minimum entropy, the node which has a descendent alphabet with the lowest estimated bound on the entropyis selected. Also, nodes which lead to an alphabet which will have a higher entropy than the current alphabet are discounted.

When performing this analysis of determining which branch is likely to lead to an alphabet with the lowest possible entropy, it is necessary to consider more than just the change that one additional character will have to the entropy. Instead, in this embodiment, the change in entropy that all potential alphabets derived from each node should be considered.

For example, figure 5 shows node 301 which leads to final nodes at layer $G_m$. The entropy of the nodes at layer $G_m$, needs to be estimated.

Referring back to equation (17), the change in multiple generations to the entropy can be potentially calculated from a first generation as it is possible to substitute the calculation of the probability for previous generations into equation (17). However, such an equation quickly gets overly complex. Also, it is not sensible to calculate this for every possible combination of characters.

Therefore, in an embodiment, the minimum bound on the entropy is calculated for all final alphabets derived from each of the nodes 303, 305, 307 in the first generation is calculated. How this calculation will be performed will be described later. (The upper bound is set at the current minimum entropy as described above.)

The algorithm therefore proceeds as follows. First, when attending to generation 1, the bounds on the entropy are estimated each of the $G_1$ nodes 303, 305 and 307. The node with the lowest entropy is then selected and the actual entropy for this node with the additional character is then calculated using the probability derived from equation (17). In this simple example, there are three nodes in $G_1$: 303; 305 and 307. The lower entropy bound for all alphabets generated via node 305 is found to be higher than the entropy of the $G_0$ node alphabet and therefore, since it is estimated that none of the descendants of node 305 can be a minimum entropy alphabet, this node and its descendants are no longer considered. The estimated bound on the entropy for the alphabets descended from node 307 is lower than the calculated entropy of the $G_0$ alphabet. However, this estimated lower bound is not lower than the lower bound estimated for alphabets descended from node 303. Therefore, the descendants from node 303 are first investigated. The actual entropy for node 303 is then calculated and this is set as the new minimum entropy calculated so far.

The process then proceeds to the second-generation layer $G_2$ and the lower bound on the entropy of all alphabets descended from nodes 309, 311 and 313 which are the children of node 303 are estimated.

Then the process repeats as before but, instead, estimating the upper and lower bounds on the entropy of the alphabets descended from each of nodes 309, 311 and 313. Here, if the estimated lower entropy bound for the descendent alphabets from 309, 311 and 313 are higher than the current minimum calculated entropy (which is for node 303), then the minimum entropy for this branch is determined to be the entropy calculated for node 303 and further nodes on this branch are not investigated.

As node 307 of $G_1$ could also potentially give rise to a lower entropy alphabet, the actual entropy for this node is then calculated. If it is lower than the entropy of the node 303, then it is set as the new minimum entropy. If it is higher than the entropy for node 303, it is not saved as the minimum entropy. However, this value is used when estimating the lower bounds on all the alphabets descending from nodes 314, 315 and 316.

If the estimated lower bounds on the entropy, for alphabets descended from nodes 314 and 316, are higher than the current minimum entropy, then these nodes and the alphabets descending thereof are not further investigated.

However, if node 315 has an estimated lower entropy bound then the entropy for node 307 is calculated and the minimum bound on the entropy of nodes 317, 319 and 321 are estimated. The process stops when either:

- All nodes that have shown that they have an alphabet, or a descendent node alphabet, with a potentially lower entropy have been investigated.
- All sequences in the sequence database consist of a single character.

The above process can be summarised as follows:

1. Calculate the probability of occurrence of each character in the current alphabet.
2. Calculate the entropy using the probabilities just calculated.
3. Estimate the min entropy for each potential new character.
4. If there is at least one new character with a lower min entropy estimate than the lowest entropy found so far:

   a. Add the new character with the lowest min entropy estimate to the current alphabet.
   b. Create a new branch with the newly created alphabet and go to step 1) Otherwise,

   a. Update the minimum entropy found so far.
   b. Record the alphabet that generated this minimum entropy.
   c. Return to the previous branching point.

5. If any of the potential new characters, which haven't already been tried, have a lower min entropy estimate than the lowest entropy found so far then:

   a. Add this character to the current alphabet.
   b. Create a new branch with the newly created alphabet and go to step 1). Otherwise, return to the previous branching point.

The above method relies on a method for estimating a minimum bound on the entropy of all of the descendent alphabets from a node. In an embodiment, the actual calculated minimum entropy is used to give an upper bound on the entropy estimate.

The calculation of the lower bound on the entropy of all descendent alphabets is more complex.

For an alphabet $A^{(i)}$ with $m$ elements, the probabilities for each character in the new alphabet $A^{(i+1)}$ with $m + 1$ elements is given by formula (18) above.

In formula (18), $n_{x_k}(c)$ takes the value 0, 1, or 2 indicating how many instances of the characters from $A^{(i)}$, referred to by the index $k$, are composed to create the new character. Since each new character is composed of two characters, if any of the values of $n_{x_k}(c)$ is 2 then all other values of $n_{x_k}(c)$ must be zero. Formula (18) does not explicitly give an indication of what the probability of the new character in alphabet $A^{(i+1)}$ is because it is equal to $P_c$ by definition.

To simplify notation, $n_{x_k}(c)$ will be re-written as $a_j$. To recap, this indicates how many instances of the characters from $A^{(i)}$, referred to by the subscript j, are composed to create the new character.

Formula (18) is a linear transformation so can be expressed in the form of a matrix equation

$$P\left(\mathbf{x}^{(i+1)}\right) = (\boldsymbol{I} + P_C)P\left(\mathbf{x}^{(i)}\right) - \mathbf{D}\,\mathbb{1}\,P_c \qquad (19)$$

where **I** is the identity matrix of dimension $m + 1$, **D** is an $(m + 1) \times (m + 1)$ diagonal matrix with the elements of $a_j$ on the first m elements of the diagonal, and $\mathbb{1}$ is an $(m + 1) \times (m + 1)$ matrix where every element is set to 1. Note that $\mathbf{x}^{(i)}$ and $\mathbf{x}^{(i+1)}$ both have dimension $m + 1$ where the extra element of $\mathbf{P}(\mathbf{x^{(i)}})$, corresponding to the non-existent character in alphabet $A^{(i)}$, is set to zero so that the probability vector still sums to one.

The equation given in (19) includes the probability of the new character as the $(m+1)$th element of $\mathbf{x}^{(i+1)}$. This has to be equal to $P_c$ which requires that $\boldsymbol{D}_{(m+1)(m+1)} = -1$.

The matrix formula given in (19) is an element of a Lie group G where all elements of the group can be expressed in the form

$$g = I + \sum_j \lambda_j \sigma^{(j)}$$

$$(20)$$

where $\lambda_j$ are scalar parameters and $\sigma^{(j)}$ are the generators of the associated Lie algebra given by

$$\sigma^{(i)} = I - D^{(i)}\mathbb{1}$$

$$(21)$$

and the matrix **D** is defined analogously to (19) with the corresponding diagonal matrices taking all permissible combinations of 0, 1, and 2 on the diagonals such that trace($D^{(i)}$) = 1.

Also, g represents the matrix that multiplies $P(x^{(i)})$ to give $P(x^{(i+1)})$ and $\lambda_j$ are scalars representing the values of $P_c$ at each level of the entropy estimation tree. (The relationship between $P_c$ and $\lambda_j$ will be described below.) When estimating a lower bound on the entropy, for q generations, the probability vector $P(x^{(q)})$ for the $q^{th}$ alphabet is determined from equation (19) after substituting the probability vector from the $P(x^{(q-1)})$ alphabet, the probability vector for the $P(x^{(q-1)})$ is derived by substituting the probability vector for the $P(x^{(q-2)})$ alphabet etc.

This leads to a polynomial expression, derived from repeated application of equation (19), of order $q$. Each application of (19) introduces an extra scalar $P_c$ and an extra m+$q$th dimensional matrix $D$. These new parameters are related to $\lambda_j$ and $\sigma^{(j)}$ respectively through the following process.

As previously explained, updating of the probability vector can be expressed as a matrix multiplication so repeated application of equation (19) is equivalent to repeated matrix multiplications. As such, the probabilities for all of the characters of the alphabet at the bottom of the entropy tree can be calculated as

$$g = \prod_j g^{(j)}$$

$$(21)$$

where each of the matrices g corresponds to the addition of a new character to the alphabet. In this instance, $j$ ranges from 1 to the maximum number of characters that could be added to the alphabet. The upper bound on $j$ is determined by considering all of the possible two character sub-sequences that could be created by repeated application of equation (19) before all of the sequences in the sequence database are composed of a single character. In practice $j$ could range over dozens of values so there would be an equivalent number of $\lambda$ and $\sigma$ parameters corresponding to the choices of $P_c$ and $D$ chosen at each application of equation (19).

In theory, the matrix calculated using equation (21) would be a polynomial function of all the different $\lambda$ parameters but since each $g^{(j)}$, given by equation (20), is an element of the group $G$, the product of any two $g^{(j)}$ matrices is also an element of $G$. This is advantageous because the properties of g can be deduced by examining the properties of the product of two arbitrary elements of $G$.

If $g = g_2 g_1$ then g can be written as

$$g = I + \lambda^{(1)}\sigma^{(1)} + \left(1 + \lambda^{(1)}\right)\lambda^{(2)}\sigma^{(2)}$$

$$(22)$$

This can be made linear in the group parameters by making the substitutions

$$t^{(1)} = \lambda^{(1)}$$

$$(23)$$

$$t^{(2)} = \left(1 + \lambda^{(1)}\right)\lambda^{(2)}$$

$$(24)$$

Thus, it follows from the form of the substitutions, and the fact that $\lambda^{(j)} \geq 0$, by definition, that both $t^{(1)}$ and $t^{(2)}$ are non-negative and independent. As a consequence, any product of $g^{(j)}$ can be expressed as a linear superposition

of the generators $\sigma^{(i)}$ with the only constraint on the weights that they be non-negative. This means that g can always be re-written so that it is a *linear* function of all the different $\lambda$ parameters.

Expressing g in terms of the new parameters gives

$$g = I + t^{(1)}\sigma^{(1)} + t^{(2)}\sigma^{(2)}$$

$$(25)$$

as per the definition of the group elements given in (20).

Given a particular element g and probability vector **P(x)**, the entropy is given by:

$$H\left(\lambda^{(i)}, \sigma^{(i)}\right) = -\sum_{\mu}[\mathbf{gP(x^{(i)})}\log(\mathbf{gP(x^{(i)})})]_{\mu} \quad (26)$$

where the summation is taken over the components of the calculated vector. Since $\mathbf{gP(x)}$ is linear, and the function $-x \log x$ is concave, the entropy given in (26) will also be concave. Given that the aim is to minimise this entropy with respect to all the $\lambda$ and $\sigma$ parameters, this means that finding the minimum entropy is a concave minimization problem.

For a given g, the minimum entropy can be found by minimizing (26) subject to the constraints

$$-\sum_{\mu}[\mathbf{gP(x^{(i)})}]_{\mu} \leq 0$$

$$(27)$$

$$\lambda^{(i)} \geq 0$$

$$(28)$$

This can be solved by any concave minimization method. One such algorithm is the collapsing polytopes method for example as explained in James E. Falk and Karla L. Hoffman. Concave minimization via collapsing polytopes. Operations Research, 34(6):919{929, 1986}.

To find the minimum entropy, all elements g corresponding to the various permissible combinations of characters that make up the alphabet need to be tried.

This is achieved by systematically generating every element of *G*, corresponding to adding *q* additional characters to the alphabet, and then finding the minimum entropy for each *g* as above. Note that only those elements *g* created by multiplying *m* matrices together need to be tested. The elements of *g* corresponding to matrix multiplication of fewer than *q* elements can be recreated by setting one or more of the parameters $\lambda^{(i)}$ to zero. These elements *of G* are explored as part of the concave minimization process.

Thus, using the above, it is possible to estimate the minimum bound on the entropy. One possible minimisation method has been suggested above, but others could be used.

The above has explained how the minimum entropy is calculated for *q* generations. The number of generations can be determined in a number of different ways.

In one embodiment, *q* is calculated to estimate the total number of generations. For example, this would be the number of new characters added one character at a time to eventually achieve an alphabet with a single character representing a single sequence.

If the algorithm were completely unconstrained then it would be possible to keep adding new characters to the alphabet to lower the entropy until it reached zero. In practice, the number of extra characters that can be added to the current alphabet is constrained by the lengths of the sequences in the sequence database. This is because when the sequences are expressed in a different alphabet, they have to consist of at least one character. As shown previously, adding new characters to the alphabet reduces the length of the sequences so the sequence lengths will eventually reduce to one character.

Given that the entropy can always be reduced by adding further characters to the alphabet, it is important to estimate how many more characters can be added to get a good minimum entropy estimate. It is important that the number of extra characters that can be added is not an underestimate as this could cause the minimum-entropy estimate to be higher than is actually achievable which would lead to potential solutions being erroneously disregarded.

One way to estimate the maximum number of extra characters that can be added to the alphabet is to consider the number of distinct characters in alphabet $A^{(i)}$ that have non-zero probability and then calculate the number of possible 2-tuples. If there are $k$ characters in the alphabet then the number of 2-tuples is given by $k^2$. Adding extra characters corresponding to these 2-tuples will reduce the length of each sequence in the database by at least one character.

After adding in the extra characters, there will be $k + k^2$ characters in the alphabet which will yield $(k + k^2)^2$ more 2-tuples. This set of 2-tuples will then reduce all the sequences by a further character. This process can be repeated until all the sequences have only one character left.

If the longest sequence in the database is $l$ characters long, when expressed in alphabet $A^{(i)}$, then the number of extra characters that have to be added to alphabet $A^{(i)}$ is calculated using the following recursive formula:

$$c_n = c_{n-1} + c_{n-1}^{2}$$

where $c_0$ = k. The maximum number of extra characters that can be added is then calculated by setting $n$ equal to $l$.

The above method is conservative since it doesn't take into account the actual content of the sequences. In an embodiment, if a less conservative upper bound on the number of extra characters is calculated then this will improve the efficiency of the algorithm as it will increase the minimum entropy estimate toward the achievable entropy given the content of the sequences in the sequence database.

Once the minimum entropy alphabet has been derived, the characters of this alphabet correspond to sequences of events, some of these repeating, some of these non-repeating. Thus, it is possible to extract both common sequences and individual sequences. By considering the time when each of these sequences occurs, the sequences can be matched to the temporal status of a system.

An example, is in identifying potential causes of cascade failure in highly interconnected networks such as power transmission systems, computer networks, traffic flows and financial institutions. In a highly connected system, cascade failure can occur if a single node in the system becomes overloaded or fails unexpectedly. If a critical node fails this can lead to surrounding nodes becoming overloaded until eventually the whole system goes off-line. Given that it is impossible to guarantee 100% availability of all nodes, it is desirable to understand how surrounding nodes in the system are used before a critical failure occurs.

In principle, given a pre-defined network architecture, it is possible to consider every eventuality and analyse how to reinforce the network to minimise the risk of cascade failure. However, in practice, the load and status of the network will be very closely related to how the network is being used at any time. If this is to be accounted for, it is necessary to analyse how the network is being used over time. To investigate this further, it is helpful to consider a case-study.

Suppose that a telecoms network uses packet switching to exchange digital data between nodes on the network. In this instance, the data to be transmitted is grouped into a packet consisting of a payload and a header. The payload contains the data that is to be transmitted while the header indicates the destination node. The packet is then passed from node to node on the network until it reaches the destination node.

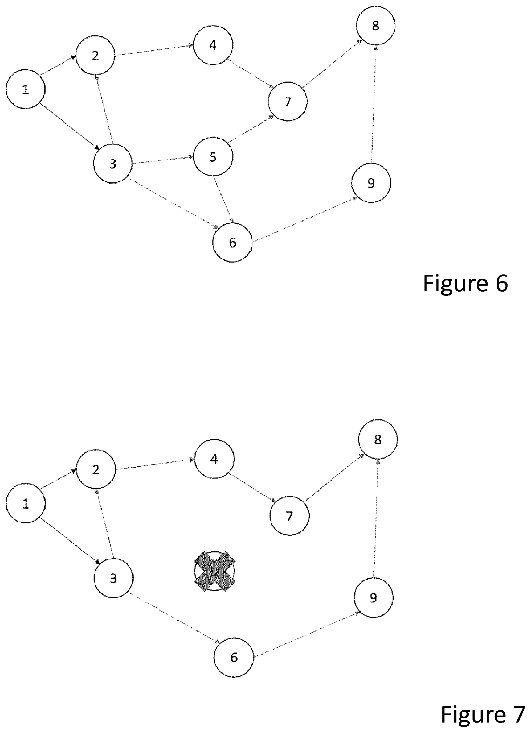

The packet switching protocol is used because it is resistant to failures of individual nodes, so long as there is an alternative route for the packet to reach its destination. This is achieved by each node the packet visits determining which node the packet should be passed on to. If a neighbouring node, on the path to the destination node, is off-line, or does not respond quickly enough, then the packet will be passed to an alternative node which is on an alternate path to the destination node. This is illustrated by considering the network in Figure 6.

If data is to be communicated from node 3 to node 8 on this network, there are multiple paths that the packets transmitted from node 3 can take. The packets can follow:

- The red route via nodes 2, 4, 7 and 8.
- The green route via nodes 6, 9 and 8.
- The two different blue routes via nodes 5, 6, 9, and 8 or 5, 7, and 8.

If the time taken for a packet to traverse the network is directly proportional to the number of nodes that it must pass through then the blue route via nodes 5, 7, and 8 or the green route via nodes 6, 9, and 8 would be given preference to maximise the communication speed between nodes 3 and 8. Given that the traffic on the network will vary all the time, it is possible that one of these nodes could be temporarily overloaded thus causing one path to be chosen over the other. Providing that the traffic load remains approximately constant, this will not have an adverse effect on the overall network performance because packets can take an alternate route until the affected node recovers.

Now, suppose that node 5 develops a hardware problem which causes it to go offline permanently. This situation is depicted in Figure 7.

Now there are only two routes for packets to go between node 3 and node 8. However, as long as the number of packets on the network is not too high, the network performance will still be acceptable. At this stage, if all the packets received at node 8 are analysed to see which route they took, it will become apparent that node 5 is no longer functioning but there should be no dropped packets.

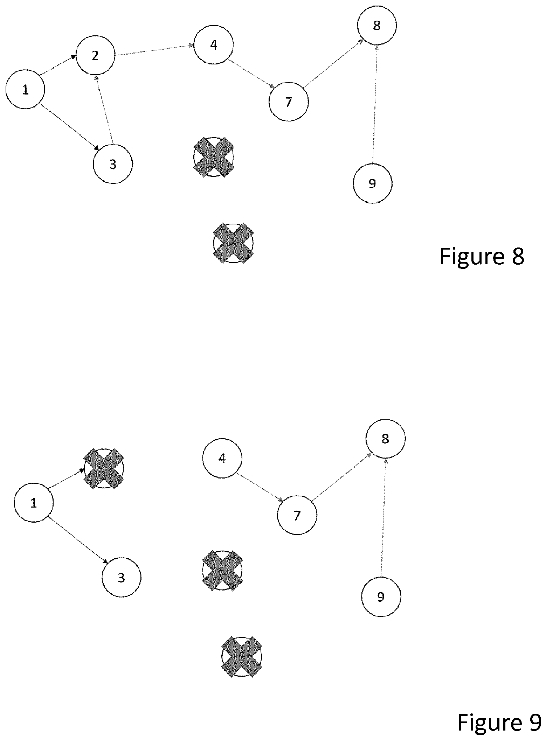

If matters get worse, and the network traffic is too high, the traffic on the network will reach a point where the green path becomes overwhelmed causing node 6 to fail. This is illustrated in Figure 8. This is a more serious situation because node 6 has failed as a consequence of the failure of node 5 and now all of the traffic has to pass along the red route which is significantly slower, since packets have to traverse four nodes to get to their destination.

Given that all of the traffic is now being diverted via the red route, it is possible that these nodes will not be able to handle all of the incoming packets, forcing one of the nodes on this route to go offline. This cascade failure scenario is shown in Figure 9 where node 2 has failed. As can be seen, there are now no routes that packets can take to transmit information from node 3 to node 8 and this will remain the case until one of the failed nodes is brought back online.

Clearly, the cascade failure scenario outlined above is undesirable and, while in this simple example, it was possible to theoretically analyse how cascade failure might occur, in a realistic network there would be far too many nodes and links to make this practicable. The above described method exploits the natural variability in network loads to determine the alternate routes that would be used in the event of a node failure before the node actually fails.

Considering each packet that traverses the network, it is possible, once it has reached its destination, to determine the path that the packet took. The path can be represented as a sequence of nodes that it passed through to get to its destination. If the load on the network increases to a point where a highly connected node, such as node 5 in Figure 6, becomes temporarily overwhelmed then the packets would be temporarily diverted via a different route which might show up as an increase in packets following the red route.

Now, consider packets travelling from node 1. The first part of their route via either nodes 2 or 3 would be unaffected if node 5 were to become temporarily overloaded. After this point, however, the sequence of nodes that the packets follow would change depending on whether they went via node 3 or node 2.

For the packets that travel via node 2, they would never encounter node 5 so the frequency of sequences where the first node is 2 would be unaffected. On the other hand, the sequences for those packets that travelled via node 3 would exhibit a change because node 5 would no longer be present in the sub-sequence corresponding to the part of the journey after the packet gets to node 3. In this instance, the first part of the sequence (i.e. whether the packet went to node 2 or node 3 first) is not interesting from the point of view of detecting where contention might occur on the network. The method outlined in the following text allows all of the sequences captured at node 8 to be analysed and split up into sub-sequences corresponding to the different interconnected parts of the network.

Once all of the sequences at node 8 have been broken down into the relevant sub-sequences, the frequency of packets traversing the network via the different sub-sequences, corresponding to sub-networks, can be counted. If these sub-sequences are ordered according to how frequently they occur, then the most frequent sub-sequences will correspond to the most common path across the network. However, these sub-sequences are arguably less interesting because, in order to detect the weaknesses in the network, it is the sub-sequences that occur second or third most commonly that correspond to alternate paths that would be used in the event of a critical node failing.

In the above description, a minimum entropy alphabet is built up based on the sequences in the sequence database. If the minimum entropy alphabet were derived for the above scenario then each character of the alphabet would correspond to a subsequence which is exhibited across all the sequences in the sequence database i.e. the set of nodes that the packets visited while traversing the network. This choice of alphabet ensures that the sequences when, expressed in this alphabet, are as non-random as possible which is to be expected for a deterministic system.

The advantage of using the entropy minimizing algorithm is that it permits the sequences of nodes to be segmented, according to the common sub-sequences, and thus compared in a more meaningful way. Without this process of determining the common sub-sequences between different routes, two paths that are identical, save for the first link, would appear to represent completely different paths across the network and the common nodes that appear in these paths would not be identifiable.

Once the second and third most common sub-sequences have been identified, a network architect can investigate how resilient the nodes along these paths are. If these nodes are not as capable as the more prominently used nodes on the network, they can be bolstered so that, in the event that a critical node fails, they will be able to handle the extra traffic. This will thus make the network more resilient to cascade failure without having to increase the capacity of all the nodes in the network.

Furthermore, once these significant sub-sequences have been identified, it is possible to monitor the sequences of nodes that packets visit on the network. If any of the previously identified sub-sequences are present then this can be highlighted in a performance dashboard to a network administrator so that they can take pre-emptive action to divert traffic or bring alternate systems online.

Furthermore, in instances where it is impossible or impractical to monitor a specific node on the network, any change in the patterns of sub-sequences for a packet traversing the network would indicate that the status of the network has changed. This could be due to the way that the network is being used (e.g. more data is being transmitted) or a connection on the network may have failed (e.g. a cable connecting two nodes has broken.) Without the knowledge of the expected frequency of occurrence of particular sub-sequences it may only be collapse of the entire network that indicates a problem.

The above example indicates how the sub-sequences can be distinguished offline, once a large amount of data has been collected. However, it would also possible to extract sub-sequences in real-time to detect unexpected behaviour of the network.

For example, suppose a website is monitoring, in real time, all of the webpages that each user visits. In this instance, the webpages would represent the nodes on the network and the sequences would correspond to the webpages visited by each user. As each user builds up a new sequence, it is possible to analyse them to extract the sub-sequences and then compare these sub-sequences with a precompiled database of expected sub-sequences.

Each of the sub-sequences in the precompiled database would correspond to a typical use of the website. For example, an internet banking website might have sequences of page visits relating to users logging on, checking their account balance, making a payment, etc. Now, suppose that during the extraction of sub-sequences, a new subsequence, or a subsequence that has previously been attributed to fraudulently activity, is observed; this could be flagged to a fraud team that could then investigate in real time and potentially intervene.

In another scenario, if the events correspond to webpages clicked on at a certain domain, and each sequence corresponds to the pages visited by a specific user, then the above method can be used to characterise the behaviour of the users. For example, if a number of users are following a long sequence to find a certain web page, then the company hosting the domain can take steps to make the passage to that page easier and hence reduce the amount of information that needs to be sent over the internet.

Figure 10 is a schematic diagram of a first system in accordance with an embodiment. The first system comprises a processor 501 and a memory 503. The processor 501 runs a first monitoring program 505 and a second monitoring program 507.

The first monitoring program receives data from a data input (not shown) concerning the performance of a second system. In this example, the second system is a network. The first monitoring program will receive data concerning the nodes visited by each packet traversing the network before the packets reach the destination node. This data is therefore a plurality of sequences of events, one sequence for each packet. The second monitoring program receives time stamped data concerning the destination node of packets traversing the network. In this embodiment the first monitoring program will also receive data identifying the packet as well as the destination node of the packet. The processor then runs the algorithm as described above to extract a minimum entropy alphabet from the data collected by the second monitoring program. The processor makes use of the memory for storing the data from the first and second monitoring programs. The processor also stores the minimum entropy calculated at any point during the branch and bound algorithm.

The extracted minimum entropy alphabet is then compared with the data collected from the first monitoring program and a relationship between the paths packets take can be established. This allows for extra capacity to be provided at nodes which might previously not be considered to be busy.

In a variation on the above, the second monitoring program is not present. Here instead of looking for a relationship between extracted sequences and the performance of the network, a plurality of sequences are provided and the occurrence of sub-sequences across different sequences in the plurality of sequences is measured.

The above method can be efficiently implemented in a computer system, for example it can be implemented in a manner to reduce network traffic and it can also be parallelised. In an embodiment, reduced network traffic can be achieved by performing some initial alphabet reduction at "the edge"/locally before transmission to the cloud, or on one chip type before transferring the next processing step in the pipeline to another chip type, thereby reducing network or in-computer traffic respectively. This would have the additional impact that memory usage locally can be reduced, in favour of transmitting alphabets and reduced event streams rather than the entire original event streams. Parallelisation of the processing is also possible, for example, by (i) edge node processing per user or (ii) taking one large event stream and splitting it across computational resources to do the alphabet reduction.

While certain embodiments have been described, these embodiments have been presented by way of example only, and are not intended to limit the scope of the inventions. Indeed the novel methods and apparatus described herein may be embodied in a variety of other forms; furthermore, various omissions, substitutions and changes in the form of methods and apparatus described herein may be made without departing from the spirit of the inventions. The accompanying claims and their equivalents are intended to cover such forms of modifications as would fall within the scope and spirit of the inventions.

**Claims**

1.  A method of monitoring a system,
    the method comprising:

    receiving first data, wherein said first data comprises a sequence of events, wherein the events are of different types;
    analysing said first data to extract patterns in said sequence of events;
    receiving second data indicating the performance of a system;
    determining a relationship between the performance of said system and extracted patterns; and
    outputting the determined relationship to a display,

    wherein analysing said first data to extract patterns in said sequence comprises:

    assigning each type of event to a character in an alphabet; and
    combining characters in said alphabet to produce a new alphabet, said new alphabet being a minimum entropy alphabet representation of the events has been reached,

    wherein determining a relationship between the status of the system and extracted patterns comprises matching characters from said minimum entropy alphabet with changes in the performance of said system.

2.  A method according to claim 1, wherein said system is capable of cascade failure.

3.  A method according to any preceding claim, wherein said system is selected from at least one of a processor, a computer network, a telecommunications network, a power network or a traffic network.

4.  A method according to claim 1, wherein receiving second data indicating the performance of a system comprises receiving data concerning parameters related to the performance of the system.

5.  A method according to claim 4, wherein said parameters are selected from at least one of a parameter indicating the operating status of a system, the length of time that the system is taking to perform operations, latency and the length of time that an information packet takes on a path through the system.

6.  A method according to any preceding claim, wherein the different types of events are selected from different node addresses or different locations in a memory.

7.  A method according to any preceding claim, wherein the first data comprises a plurality of individual sequences.

8.  A method according to claim 7, wherein the plurality of individual sequences relate to the path taken by a user or information packet when navigating the system.

9.  A method according to any preceding claim, wherein combining characters to produce a new alphabet comprises generating successive generations of alphabets where each generation of alphabet contains a single new character produced by combining two characters in the previous generation.

10. A method according to claim 9, wherein the generated alphabets form a tree structure and said minimum entropy alphabet is determined by searching said tree structure.

11. A method according to claim 10, wherein the tree structure is searched using a branch and bound method.

12. A method according to claim 11, wherein the branch and bound method comprises selecting a branch for investigation by estimating the lowest entropy of the alphabets at subsequent generations of the branch, and wherein wherein the lowest entropy of the alphabets at the subsequent generations of the branch is determined by expressing the entropy of these alphabets as a function in terms of first indexed parameter and second indexed parameter, the minimum entropy being estimated by estimating the minimum of the function with respect to both the first and second indexed parameters, wherein the first indexed parameter is the probability that each new character added in each generation appears in the sequence and the second indexed parameter is a matrix, for each generation representing the combination of characters that are used to make the new character.

13. A method according to claim 12, wherein the minimum entropy is estimated by exploiting the Lie group properties of the transformations which relate the probabilities of a character in an alphabet with the character probabilities in alphabets generated at subsequent generations.

14. A method according to any of claims 12 or 13, wherein the minimum entropy is estimated for an estimated total number of generations in the tree.

15. A monitoring apparatus,
the apparatus comprising:

a processor adapted to:

receive first data, wherein said first data comprises a sequence of events, wherein the events are of different types;
analyse said first data to extract patterns in said sequence of events;
receiving second data indicating the performance of a system; and
determine a relationship between the performance of said system and extracted patterns,

the apparatus further comprising an output for outputting the determined relationship,

wherein the processor is adapted to analyse said first data to extract patterns in said sequence by:

assigning each type of event to a character in an alphabet; and
combining characters in said alphabet to produce a new alphabet, said new alphabet being a minimum entropy alphabet representation of the events has been reached,
the processor being adapted to determine a relationship between the status of the system and extracted patterns by matching characters from said minimum entropy alphabet with changes in the performance of said system.

3

1

5

Figure 1

501

503

505    507

Figure 10

Receive sequence of events    S101

Assign a zeroth alphabet of characters to said sequence of events    S103

S109
Monitor status of system over time

Generate minimum entropy alphabet by combining characters from the zeroth alphabet to generate new characters    S105

Extracting patterns in sequence events from the new characters in the minimum entropy alphabet    S107

Determining a relationship between the extracted patterns and the temporal status of the system    S111

Output to a display a report of the causes for changes in status of the system    S113

Figure 2

Receive sequence of events    S201

Extract 2 character sequences, wherein each 2 character sequence is designated as a new character in a first alphabet    S203

Calculate Entropy of First Alphabet    S205

Create further new alphabets by combining characters from said first alphabet    S207

Select the alphabet with the lowest entropy    S209

Determine relationship between characters of lowest entropy alphabet and changes in the status of a system    S211

Figure 3

301   G0

307

303   G1

314   315   G2

309   311   313   316

317   319   321

Figure 4

301

Gm   Figure 5

Figure 6

Figure 7

Figure 8

Figure 9

Europäisches Patentamt

European Patent Office

Office européen des brevets

# EUROPEAN SEARCH REPORT

Application Number

EP 18 20 6855

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/208657 A1 (CHESSELL AMANDA ELIZABETH [GB] ET AL) 28 August 2008 (2008-08-28) | 1-8,15 | INV. G06F11/34 G06F11/07 |
| A | * figures 1, 2, 3a, 3b, 4 * <br> * claims 1,6, 10, 19 * <br> * paragraph [[0034],[0036] * <br> * paragraph [0011] * <br> * paragraph [0002] * | 9-14 | |
| Y | US 2017/102997 A1 (PURUSHOTHAMAN SASIDHAR [IN] ET AL) 13 April 2017 (2017-04-13) | 1-8,15 | |
| A | * abstract * <br> * figures 1,3,4,5, 6, 8B, 9 * <br> * paragraph [0009], [0023], [0024] * <br> * claims 1,9 * | 9-14 | |
| Y | US 2017/104650 A1 (TEE PHILIP [US] ET AL) 13 April 2017 (2017-04-13) | 1-8,15 | |
| A | * paragraphs [0069] - [0072] * <br> * claims 26,28 * | 9-14 | |
| Y | US 2006/106702 A1 (PAUW WIM D [US] ET AL) 18 May 2006 (2006-05-18) | 1-8,15 | TECHNICAL FIELDS SEARCHED (IPC) <br><br> G06F |
| A | * paragraph [0018]-[0021] * | 9-14 | |
| A | NIKOLAJ TATTI ET AL: "The long and the short of it : summarising event sequences with serial episodes", KNOWLEDGE DISCOVERY AND DATA MINING, 12 August 2012 (2012-08-12), page 462, XP055578896, 2 Penn Plaza, Suite 701 New York NY 10121-0701 USA DOI: 10.1145/2339530.2339606 ISBN: 978-1-4503-1462-6 * figure 1 * * page 463, section 2.3, 1st paragraph on; left column on page 465 * | 1-15 | |

The present search report has been drawn up for all claims

| Place of search | Date of completion of the search | Examiner |
|---|---|---|
| Munich | 12 April 2019 | Leineweber, Harald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 20 6855

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2019

| Patent document cited in search report | | Publication date | Patent family member(s) | | Publication date |
|---|---|---|---|---|---|
| US 2008208657 | A1 | 28-08-2008 | NONE | | |
| US 2017102997 | A1 | 13-04-2017 | NONE | | |
| US 2017104650 | A1 | 13-04-2017 | NONE | | |
| US 2006106702 | A1 | 18-05-2006 | US 2006106702 A1 | | 18-05-2006 |
| | | | US 2009006615 A1 | | 01-01-2009 |
| | | | US 2011106944 A1 | | 05-05-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JAMES E. FALK ; KARLA L. HOFFMAN.** Concave minimization via collapsing polytopes. *Operations Research,* 1986, vol. 34 (6), 919